(19) **Europäisches Patentamt / European Patent Office / Office européen des brevets**

(11) **EP 2 735 892 A1**

(12) # EUROPÄISCHE PATENTANMELDUNG

(43) Veröffentlichungstag:
28.05.2014  Patentblatt 2014/22

(51) Int Cl.:
*G01V 99/00* (2009.01)   *E21B 43/26* (2006.01)

(21) Anmeldenummer: 12193601.7

(22) Anmeldetag: 21.11.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Geowatt AG**
**8050 Zürich (CH)**

(72) Erfinder:
 • **Badoux, Vincent**
 **8006 Zürich (CH)**

 • **Mégel, Thomas**
 **8005 Zürich (CH)**
 • **Baujard, Clément**
 **8037 Zürich (CH)**

(74) Vertreter: **Hansen, Jochen**
**Hansen und Heeschen**
**Patentanwälte**
**Eisenbahnstrasse 5**
**21680 Stade (DE)**

(54) **Verfahren zur Auswertung geophysikalischer Daten aus dem Untergrund sowie kartografische Darstellung dafür**

(57)  Die Erfindung betrifft Verfahren zur Auswertung geophysikalischer Daten aus dem Untergrund, für das das Spannungsfeld mit seiner grössten Hauptspannung ($S_1$) und kleinsten Hauptspannung ($S_3$) sowie ein Gesteinsbruchkriterium (T) im Untergrund als bekannt vorausgesetzt werden, mit den Schritte:

- Abziehen des hydrostatischen Druckes vom Spannungsfeld im Untergrund zum effektiven Spannungsfeld,

- Bestimmen eines Reaktivierungsdruckes ($\Delta P$) als Differenz zwischen dem Gesteinsbruchkriterium (T) und dem effektiven Spannungsfeld

Ferner betrifft die Erfindung eine kartografische Darstellung mit lateralen Achsen (x, y), auf der der gemäß einem der vorangehenden Ansprüche zu einer im Untergrundraum definierten Zielfläche berechnete Reaktivierungsdruck ($\Delta P$) dargestellt ist.

Fig. 1

EP 2 735 892 A1

## Beschreibung

Die Erfindung betrifft ein Verfahren zur Auswertung geophysikalischer Daten aus dem Untergrund, für das das Spannungsfeld mit seiner kleinsten Hauptspannung und größten Hauptspannung sowie ein Gesteinsbruchkriterium im Untergrund als bekannt vorausgesetzt werden. Ferner betrifft die Erfindung eine kartografische Darstellung mit Koordinaten-Achsen auf der die ausgewerteten geophysikalischen Daten dargestellt sind.

Auswerteverfahren für geophysikalische Daten vom Untergrund dienen zur näheren Bestimmung bestimmter Eigenschaften des Untergrundes. Solche Auswerteverfahren zielen insbesondere auf die Lokalisierung von Lagerstätten, in denen eine Ausbeutung von natürlichen Ressourcen, beispielsweise Kohlenwasserstoffe, Wasser oder Wärme, technisch möglich und ökonomisch sinnvoll ist. Dabei ist eine technisch und wirtschaftlich durchführbare Ausbeutung einer Lagerstätte von vielen Kriterien, wie beispielsweise seiner Tiefe, seinem Volumen, den Bohrkosten und dergleichen abhängig. Häufig ist die Produktivität einer Lagerstätte das wichtigste Kriterium. Die Produktivität einer Lagerstätte sagt dabei aus, in welcher Zeit das Lagerstättenvolumen abgebaut werden könnte. Die Produktivität wird also häufig als Fließrate oder Abbaurate dargestellt. Damit hängt die Produktivität der Lagerstätte von dem Auslösevermögen der Ressource (Öl, Gas, Wasser oder Wärme) ab. Dieses fluide Leistungsvermögen wird auch Permeabilität genannt. Die Permeabilität und die Fließrate sind eng miteinander verbunden.

Öl, Gas und Wasser können im Porenvolumen des Gesteins vorliegen. Die Permeabilität des Gesteins ist zunächst von der Offenporigkeit abhängig. Geologische Strukturen, wie beispielsweise Störungen, Klüfte und Risse, können die Permeabilität des Gesteins durch vorhandene oder erzeugte Kanäle, durch die die Ressource transportiert werden kann, stark erhöhen. Dabei hängt der Einfluss der Risse auf die Permeabilität von den Eigenschaften der Risse, wie deren Größe, deren Öffnung und der Anschlussfähigkeit der Risse untereinander, dem Rissnetzwerk, ab.

Entsprechend ist bekannt, eine Lagerstätte für die Ausbeutung durch geeignete Maßnahmen zur Verbesserung der Produktivität zu entwickeln, beispielsweise durch Stimulationstechniken. Davon werden hier die hydraulischen Stimulationstechniken betrachtet. Mit einer hydraulischen Stimulation wird eine Injektionsflüssigkeit in die Lagerstätte unter hohem Druck eingepresst, um bereits existierende Strukturen, wie Störungszonen und Risse zu aktivieren, oder neue Risse im so genannten "jacking" oder "cracking" oder "fracturing" zu erzeugen. Derartige Stimulierungstechniken sind üblich in der Öl- und Gasindustrie, beispielsweise für die Ausbeutung von Schiefergas, oder auch in Geothermieprojekten, den so genannten "Enhanced Geothermal Systems (EGS)".

Der Untergrund (die Erdkruste oder die Lithosphäre) ist physikalischen Kräften ausgesetzt, die einerseits von der Auflast des Gesteins selbst, dem so genannten lithosstatischen Druck, herrührt. Die im Porenvolumen vorhandene Flüssigkeit ist im Wesentlichen dem Gewicht der auflastenden Flüssigkeitssäule ausgesetzt. Im Fall von Wasser ist dies der hydrostatische Druck. Auf der anderen Seite rühren die Kräfte von lateralen Bewegungen der Gesteinsmassen aufgrund der Plattentektonik her. Dies führt dazu, dass jeder einzelne Punkt im Untergrund bestimmten Kräften ausgesetzt ist, die auch als Spannung (Kraft pro Fläche) ausgedrückt wird. Die Spannung ist ein Parameter, dessen Intensität richtungsabhängig (anisotrop) ist. Dieser Spannungszustand im Untergrund wird klassisch durch die Theorie der Gesteinsmechanik beschrieben.

Bei Anwendung einer hydraulischen Stimulation wird folglich durch die Flüssigkeitsinjektion in der Lagerstätte das dort herrschende Spannungsfeld gestört, womit Entlastungsbewegungen entlang Schwächezonen, wie Störungen oder Rissen als seismische Ereignisse (Erdbeben) entstehen können. Entsprechend ist die Effizienz einer Stimulation von den Spannungsbedingungen und den Gesteinseigenschaften im Untergrund abhängig. An einigen Stellen kann der erforderliche Injektionsdruck so hoch sein, dass er technisch und/oder wirtschaftlich nicht durchführbar ist. An anderen Stellen kann bereits ein kleiner Injektionsdruck zur Lagerstättenstimulation ausreichen. Andererseits kann das herrschende Spannungsfeld auch Aufschlüsse über die Gefahr induzierter Seismizität bei Anwendung der Stimulierungstechnik geben.

Aufgabe der Erfindung ist es, ein Verfahren zur Auswertung geophysikalischer Daten vom Untergrund anzugeben, bei dem unter Berücksichtigung des im Untergrund herrschenden Spannungsfeldes und den Gesteinseigenschaften eine Aussage über die Reaktivierungsmöglichkeiten von geologischen Strukturen im Untergrund gegeben werden können. Ferner ist es Aufgabe der Erfindung die Ergebnisse zur weiteren Verwendung geeignet darzustellen.

Gelöst wird die Erfindung mit einem Verfahren gemäß Anspruch 1. Durch das Abziehen vom hydrostatischen Druck vom bekannten Spannungsfeld im Untergrund wird berücksichtigt, dass beim Stimulieren des Untergrundes stets eine Flüssigkeitssäule von einem Bohrlochkopf bis zum betrachteten Punkt im Untergrund als hydrostatische Auflast dem dort herrschenden Spannungsfeld entgegensteht. Das effektive Spannungsfeld des betrachteten Punktes im Untergrund ist somit von diesem hydrostatischen Druck bereinigt. Wird nun die Differenz zwischen dem bekannten Gesteinsbruchkriterium an der entsprechenden Lokation und dem dort herrschenden effektiven Spannungsfeld berechnet, ergibt sich daraus der erforderliche Reaktivierungsdruck, ab der eine Initiierung von Rissbildungen erfolgen kann. Der so definierte Reaktivierungsdruck gibt dabei das Potenzial zur Reaktivierung im Untergrund an.

Bevorzugt wird das Gesteinsbruchkriterium nach Coulomb-Mohr bestimmt, bei dem aus Reibungskoeffizienten der Kluft, die Kluftskohäsion und der Normalspannung zur Scherfläche das entsprechende Bruchkriterium ermittelt wird.

In diesem Zusammenhang wird darauf hingewiesen, dass die Werte für Reibungskoeffizient der Kluft, Kluftskohäsion sowie das Spannungsfeld mit seinen Hauptspannungen $S_1$, $S_2$, $S_3$ Raumvektoren sind, die in Abhängigkeit ihrer räumlichen Lage variieren, also abhängig sind von x,y,z.

Unter der Annahme des Gesteinsbruchkriteriums nach Coulomb-Mohr kann dann der Reaktivierungsdruck zu jedem Raumpunkt (x,y,z) gemäß Anspruch 3 berechnet werden.

Wenn für eine Exploration oder Exploitation mit einer Flüssigkeitsinjektion an einem Bohrloch der Bohrlochkopfinjektionsdruck kleiner dem Reaktivierungsdruck ist, wird induzierte Seismizität weitgehend vermieden.

Im Gegensatz dazu werden induzierte seismische Ereignisse zur Erreichung einer starken Stimulation hingenommen, wenn für eine Exploration oder Exploitation mit einer Flüssigkeitsinjektion an einem Bohrloch der Bohrlochkopfinjektionsdruck größer dem Reaktivierungsdruck ist.

Dadurch, dass eine Zielfläche im Untergrund definiert wird, zu der der jeweilige Reaktivierungsdruck berechnet und zugeordnet wird, wird das Reaktivierungspotenzial auf einer bestimmten Zielfläche quantifiziert. Bevorzugt wird der Reaktivierungsdruck für die Zielfläche kartografisch dargestellt.

Wenn die Zielfläche eine konstante vorgegebene Tiefe, eine konstante vorgegebene Temperatur oder einen bestimmten geologischen Horizont im Untergrund darstellt, kann beispielsweise als Zielfläche die für einen Betrieb eines Geothermiekraftwerks mindestens erforderliche Untergrundtemperatur als Zielfläche gewählt werden, womit dann direkt dazu das Reaktivierungspotenzial dargestellt wird.

Wenn die Darstellung des Reaktivierungsdruckes in einer Farbskala, Grauabstufung oder Schraffur entsprechend dem ermittelten Wertebereich ausgebildet ist, kann das dargestellte Reaktivierungspotenzial schnell erfasst werden und geeignete Bohrlokationen für die Ausbeutung des Reservoirs übersichtlich ermittelt werden.

Dadurch, dass bei einer räumlich nicht ebenen Zielfläche ferner die Tiefenangaben des Zielhorizontes der Darstellung des Reaktivierungsdruckes überlagert sind, wird neben der Zuordnung des Reaktivierungsdruckes zur Zielfläche auch die tatsächliche Tiefenlage der Zielfläche an den betreffenden lateralen Positionen dargestellt, um beispielsweise auch die tiefenabhängigen Bohrkosten bei der Auswahl einer geeigneten Bohrlokation aus einer kartografischen Darstellung schnell erfassen und berücksichtigen zu können.

Nachfolgend werden Anwendungsbeispiele der Erfindung beschrieben.

1. Für eine Geothermielagerstätte, die eine ausreichende, natürliche Produktivität ausweist, soll bei der für die Ausbeutung der Wärme erforderlichen Flüssigkeitszirkulation keine Stimulation entstehen, um jegliche Risiken für induzierte Seismizität zu vermeiden. Für ein solches Projekt wäre das Ziel, Bereiche auszusuchen, in denen das Reaktivierungspotenzial maximal ist, um keine Stimulation zu erzeugen und induzierte Seismizität weitgehend zu vermeiden. Entsprechend könnten diese Bereiche aus der kartografischen Darstellung ermittelt werden.

2. Für Lagerstätten, dessen natürliche Produktivität zu gering für eine wirtschaftliche Auswertung ist, wird dann eine Stimulation vorgesehen, um die Lagerstättenproduktivität künstlich zu verbessern, wie beispielsweise bei einem "Enhanced Geothermal Systems (EGS)". In diesem Fall sind niedrige Werte für den Reaktivierungsdruck zielführend. Aufgrund des niedrigen Injektiondrucks, um ein Stimulieren der Lagerstätte zu initiieren, wird ein geringer Injektionsdruck für eine wirtschaftliche Durchführung bevorzugt. Entsprechend sind aus der katografischen Darstellung Bereiche bevorzugt, die ein geringes Reaktivierungspotenzial aufweisen.

3. Für den Fall, dass die natürliche Produktivität nicht so hoch, wie nach der ersten Bohrung erwartet, ausfällt, könnte als letzte Option die Produktivität durch Stimulierung der Lagerstätte verbessert werden, wobei der maximale Injektionsdruck bis nahe an den Reaktivierungsdruck herangefahren werden kann, um gleichwohl das Risiko von induzierter Seismizität zu begrenzen.

Nachfolgend wird das Auswerteverfahren sowie die kartografische Darstellung anhand von Ausführungsbeispielen unter Bezugnahme auf die beiliegenden Zeichnungen beschrieben.

Darin zeigt:

Fig. 1 ein Mohr-Diagramm,

Fig. 2 das Diagramm gemäß Figur 1 als Darstellung des effektiven Spannungsfeldes,

Fig. 3 das in Figur 2 dargestellte Diagramm mit Darstellung des Reaktivierungsdruckes,

Fig. 4 eine Isohypsendarstellung einer Zielfläche,

Fig. 5 eine Darstellung des Spannungsfeldes entlang der Zielfläche gemäss Fig. 4 und

Fig. 6 eine Darstellung des Reaktivierungsdrucks entlang der Zielfläche gemäß Figuren 4, 5.

Ein Gesteinsvolumen der Lithosphäre ist externen Kräften ausgesetzt. Diese Kräfte erzeugen einen Spannungszustand im betrachteten Untergrundpunkt. Grundsätzlich wird dieser Spannungszustand mit drei Hauptspannungen, nämlich einer maximalen Hauptspannung $S_1$, einer mittleren Hauptspannung $S_2$ und einer minimalen Hauptspannung $S_3$ und deren Richtung beschrieben. Der Spannungszustand verändert sich im Raum und wird als Spannungsfeld bezeichnet. Somit liegt an einem Betrachtungspunkt im Untergrund mit den Koordinaten (x,y,z) ein Spannungszustand vor, bestehend aus den drei Hauptspannungskomponenten $S_1$ (x, y,z), $S_2$ (x,y,z) und $S_3$ (x,y,z). Wirkt diese Spannung auf einer Fläche im Raum, kann die Spannung in eine normal zur Fläche gerichtete Spannung, die Normalspannung $\sigma_n$ und eine tangential auf der Fläche wirkende Scherspannung $\tau$ zerlegt werden.

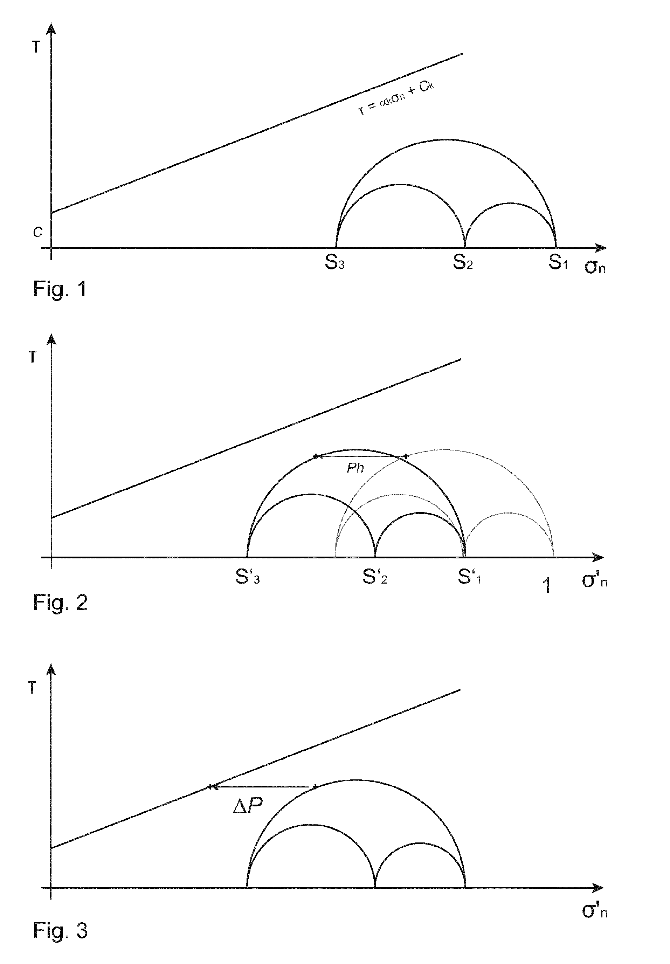

Herr Otto Mohr entwickelte im 19. Jahrhundert ein Diagramm, das Mohr-Diagramm (siehe Figur 1), in dem die horizontale Achse die Normalspannung $\sigma_n$ und die vertikale Achse die Scherspannung $\tau$, die auf einer Fläche durch den betrachteten Untergrundpunkt wirkt, darstellen. Das Mohr-Diagramm ist eine grafische Darstellung der Spannungsfeldprojektion auf alle möglichen Flächenorientierungen unter einem vorgegebenen Spannungsfeld. Im Raum ist dieser Wertebereich durch drei Kreise begrenzt, die Mohr-Kreise genannt werden. Die Mohr-Kreise sind alleine durch die Werte der drei Hauptspannungen definiert, wie dies in Figur 1 dargestellt ist.

Entsprechend bricht das Gestein im Untergrund, wenn dort die Spannung die Scherfestigkeit des Gesteins übersteigt. Eine weitgehend anerkannte Theorie zur Bestimmung, wann der Bruch auftritt, ist durch das Gesteinsbruchkriterium von Coulomb-Mohr beschrieben. Diese Theorie setzt voraus, dass die Scherfestigkeit des Gesteins aus zwei Anteilen gebildet ist. Einem von der Normalspannung abhängigen Reibungsanteil $\mu$ $\sigma_n$ und einem konstanten Anteil C. $\mu$ stellt dabei den internen Reibungskoeffizienten des Gesteins und C die Gesteinskohäsion an dieser Stelle dar. Im Mohr-Diagramm ist dieses Coulomb-Mohr Gesteinsbruchkriterium durch eine gerade Linie dargestellt, deren Winkel zur horizontalen Achse "Winkel der internen Reibung" genannt wird mit $\phi = \tan^{-1}(\mu)$ (siehe Figur 1). Im Bereich über der Coulomb-Mohr Geraden tritt Gesteinsbruch auf.

Bei geklüfteten Gestein muss zwischen dem Bruchkriterium für die intakte Gesteinsmatrix und den bereits vorhandenen Rissen oder Klüften unterschieden werden. Die Parameter für beide Fälle unterscheiden sich deutlich. Im weiteren werden nur die Klüfte betrachtet, daher beziehen sich die Parameter $\mu_k$ (Reibungskoeffizient) und $C_k$ (Kluftskohäsion) auf die entsprechenden Klufteigenschaften.

Veränderungen des Spannungszustandes beeinflussen die Lage der Mohr-Kreise im Mohr-Diagramm. Wenn ein Mohr-Kreis die Mohr-Coulomb-Gerade berührt oder schneidet, treten Brüche von optimal orientierten Rissen auf. Somit kann das Mohr-Diagramm verwendet werden, um das Potenzial zur Reaktivierung von Gesteinsbrüchen im Untergrund zu bestimmen.

Änderungen des Spannungszustandes werden beispielsweise durch das Erhöhen der Porendrucks im Gestein, beispielsweise durch eine Flüssigkeitsinjektion, ausgelöst, womit die Normalspannungskomponente auf einer Störungsfläche verringert wird. Im Mohr-Diagramm ergibt dies eine Verschiebung der Mohr-Kreise nach links. In Figur 2 ist der Einfluss des hydrostatischen Drucks $P_h$ der im Untergrund wirkenden Wassersäule berücksichtigt, womit die Mohr-Kreise entsprechend den somit wirkenden effektiven Hauptspannungen $S'_1$, $S'_2$, $S'_3$ dichter an die Coulomb-Mohr Gerade heranrücken.

Bei einer Flüssigkeitsinjektion zur Lagerstättenstimulierung wird die verbleibende Normalspannung weiter vermindert. Dabei werden die Mohr-Kreise weiter nach links verschoben. Sobald der zwischen $S'_1$ und $S'_3$ verlaufende Mohr-Kreis die Coulomb-Mohr Gesteinsbruchgerade berührt, könnte ein Bruch eines optimal orientierten Risses auftreten, wie in Figur 3 mit Reaktivierungsdruck $\Delta P$ dargestellt ist. Somit entspricht der Reaktivierungsdruck $\Delta P$ der horizontalen Distanz zwischen dem Mohr-Kreis unter Einfluss des effektiven Spannungsfeldes und der Coulomb-Mohr Geraden, was erfindungsgemäß entsprechend ausgewertet wird. Der Reaktivierungsdruck $\Delta P$ gibt somit ein Maß an, bei dem eine Reaktivierung des Gesteins im Untergrund durch Gesteinsbruch beziehungsweise Rissbildung entsteht.

Sobald das Spannungsfeld im Untergrund als bekannt vorausgesetzt werden kann und ein geeignetes Gesteinsbruch-Kriterium vorausgesetzt werden kann, ist es somit mit den erfindungsgemäßen Auswerteverfahren möglich, den am Bohrlochkopf aufzuwendenden Injektionsdruck auszurechnen, um eine Rissbildung, beispielsweise für eine Lagerstättenstimulation, zu erreichen. Da mit dem Überschreiten des Reaktivierungsdruckes $\Delta P$ auch die Gefahr von induzierter Seismizität deutlich steigt, kann das Kriterium auch zur Vermeidung von induzierter Seismizität verwendet werden, was insbesondere bei tiefen Geothermie-Projekten von großem Interesse ist.

Insgesamt kann somit das Reaktivierungspotenzial für den gesamten Untergrund in seiner räumlichen Variabilität berechnet werden. Zur Interpretation der so gewonnenen Auswertedaten ist es von besonderem Interesse, das Reaktivierungspotential, nämlich den Reaktivierungsdruck $\Delta P$ entlang von Flächen von besonderem Interesse, den sogenannten Zielflächen, darzustellen.

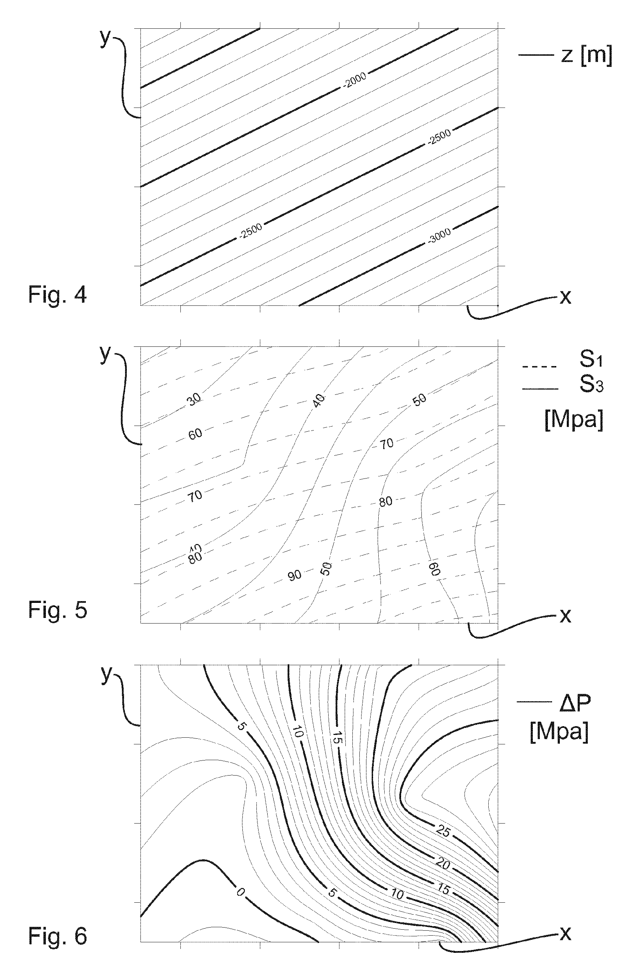

In dem in den Figuren 4 bis 6 dargestellten Ausführungsbeispiel wird ein Gebiet zur Gewinnung von Geothermie untersucht. Durch die Festlegung der vorgegebenen Untergrundtemperatur von 150°C wird ein Zielhorizont definiert, der in Figur 4 dargestellt wird. Dabei ist die Tiefenlage dieser Zielfläche durch Isohypsen dargestellt.

In Figur 5 ist das Spannungsfeld für den in Figur 4 dargestellten Zielhorizont dargestellt, wobei die maximale Hauptspannung $S_1$ mit gestrichelten und die minimale Hauptspannung $S_3$ mit durchgehenden Isolinien bezeichnet sind.

In Figur 6 ist das Reaktivierungspotenzial, nämlich der Reaktivierungsdruck $\Delta P$ für die Zielfläche ermittelt und in entsprechenden Isolinien für den Reaktivierungsdruck dargestellt. Selbstverständlich kann die kartografische Darstellung zur leichteren Interpretation auch farbig nach einer Farbskala ausgestaltet werden.

BEZUGSZEICHENLISTE

| | |
|---|---|
| $S_1; S'_1$ | maximale Hauptspannung; effektiv |
| $S_2; S'_2$ | mittlere Hauptspannung; effektiv |
| $S_3; S'_3$ | minimale Hauptspannung; effektiv |
| $\sigma_n; \sigma'_n$ | Normalspannung; effektiv |
| $\tau$ | Scherspannung |
| $P_h$ | hydrostatischer Druck |
| $\Delta P$ | Reaktivierungsdruck |
| x, y, z | Raumkoordinaten |

**Patentansprüche**

1. Verfahren zur Auswertung geophysikalischer Daten aus dem Untergrund, für das das Spannungsfeld mit seiner grössten Hauptspannung ($S_1$) und kleinsten Hauptspannung ($S_3$) sowie ein Gesteinsbruchkriterium ($\tau$) im Untergrund als bekannt vorausgesetzt werden, **gekennzeichnet durch** die Schritte:

   - Abziehen des hydrostatischen Druckes vom Spannungsfeld im Untergrund um das effektive Spannungsfeld ($S'_1, S'_2, S'_3$) zu bestimmen,
   - Bestimmen eines Reaktivierungsdruckes ($\Delta P$) als Differenz zwischen dem Gesteinsbruchkriterium ($\tau$) und dem effektiven Spannungsfeld.

2. Verfahren nach Anspruch 1, **dadurch gekennzeichnet, dass** das Gesteinsbruchkriterium nach Coulomb-Mohr mit

$$\tau = \mu_k \sigma_n + C_k$$

   bestimmt wird, wobei

   - $\mu_k$ der Reibungskoeffizient einer optimal orientierten Kluft,
   - $C_k$ die Kluftskohäsion und
   - $\sigma_n$ die Normalspannung zur Scherfläche sind.

3. Verfahren nach Anspruch 2, **dadurch gekennzeichnet, dass** sich der Reaktivierungsdruck ($\Delta P$)

bis zum Gesteinsbruch im Untergrund berechnet nach:

$$\Delta P = 1/\mu_k \left( C_k + \mu_k x_0 - r \left( \mu_k^2 + 1 \right)^{1/2} \right) - P_h,$$

mit

   - $x_0 = \frac{1}{2}(S_1 + S_3)$,
   - $r = \frac{1}{2}(S_1 - S_3)$,
   - $P_h = \rho_f g h$ (hydrostatischer Druck) mit
   - $\rho_f$ = Dichte von Flüssigkeit,
   - g = Erdbeschleunigung und
   - h = Tiefe.

4. Verfahren nach Anspruch 1, 2 oder 3, **dadurch gekennzeichnet, dass** für eine Exploration oder Exploitation mit einer Flüssigkeitsinjektion an einem Bohrloch der Bohrlochkopfinjektionsdruck ($P_{Inj}$) kleiner dem Reaktivierungsdruck ($\Delta P$) ist.

5. Verfahren nach Anspruch 1, 2 oder 3, **dadurch gekennzeichnet, dass** für eine Exploration oder Exploitation mit einer Flüssigkeitsinjektion an einem Bohrloch der Bohrlochkopfinjektionsdruck ($P_{Inj}$) größer dem Reaktivierungsdruck ($\Delta P$) ist.

6. Verfahren nach einem der vorangehenden Ansprüche, **dadurch gekennzeichnet, dass** eine Zielfläche im Untergrund definiert wird, zu der der jeweilige Reaktivierungsdruck ($\Delta P$) berechnet und zugeordnet wird.

7. Verfahren nach Anspruch 6, **dadurch gekennzeichnet, dass** der Reaktivierungsdruck ($\Delta P$) für die Zielfläche kartografisch dargestellt wird.

8. Verfahren nach Anspruch 6 oder 7, **dadurch gekennzeichnet, dass** die Zielfläche eine konstante vorgegebene Tiefe, eine konstante vorgegebene Temperatur oder durch andere Kriterien definierter Horizont im Untergrund darstellt.

9. Kartografische Darstellung mit lateralen Koordinaten-Achsen (x, y), auf der der gemäß einem der vorangehenden Ansprüche zu einer im Untergrundraum definierten Zielfläche berechnete Reaktivierungsdruck ($\Delta P$) dargestellt ist.

10. Kartografische Darstellung nach Anspruch 9, **dadurch gekennzeichnet, dass** die Darstellung des Reaktivierungsdruckes ($\Delta P$) in einer Farbskala, Grauabstufung, Schraffur oder Isolinien entsprechend dem ermittelten Wertebereich ausgebildet ist.

11. Kartografische Darstellung nach Anspruch 9 oder 10, **dadurch gekennzeichnet, dass** bei einem

**EP 2 735 892 A1**

räumlich nicht ebenen Zielfläche ferner die Tiefenangaben des Zielhorizontes der Darstellung des Reaktivierungsdruckes ($\Delta$P) überlagert sind.

$\tau = \alpha_K \sigma_n + C_K$

S₃  S₂  S₁  σₙ

Fig. 1

Ph

S'₃  S'₂  S'₁  1  σ'ₙ

Fig. 2

ΔP

σ'ₙ

Fig. 3

Fig. 4

Fig. 5

Fig. 6

Europäisches
Patentamt

European
Patent Office

Office européen
des brevets

# EUROPÄISCHER RECHERCHENBERICHT

Nummer der Anmeldung

EP 12 19 3601

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 419 396 A (PALMER IAN D [US] ET AL) 30. Mai 1995 (1995-05-30) * Spalten 5,6,9-12; Abbildungen 1,2 * ----- | 1-3,5-11 | INV. G01V99/00 E21B43/26 |
| X | MATHIAS S A ET AL: "Screening and selection of sites for CO2 sequestration based on pressure buildup", INTERNATIONAL JOURNAL OF GREENHOUSE GAS CONTROL, ELSEVIER LTD, GB, Bd. 3, Nr. 5, September 2009 (2009-09), Seiten 577-585, XP026338085, ISSN: 1750-5836, DOI: 10.1016/J.IJGGC.2009.05.002 [gefunden am 2009-06-23] * Seiten 578-579; Abbildung 1 * ----- | 1-4 | |
| A | GUOXIANG CHI ET AL: "Hydrodynamic analysis of clastic injection and hydraulic fracturing structures in the Jinding Zn-Pb deposit, Yunnan, China", GEOSCIENCE FRONTIERS, ELSEVIER, AMSTERDAM, NL, Bd. 3, Nr. 1, 29. Juni 2011 (2011-06-29), Seiten 73-84, XP028339500, ISSN: 1674-9871, DOI: 10.1016/J.GSF.2011.07.003 [gefunden am 2011-08-06] * Seiten 80-81 * ----- | 1-11 | |

RECHERCHIERTE SACHGEBIETE (IPC)

G01V
E21B

Der vorliegende Recherchenbericht wurde für alle Patentansprüche erstellt

| Recherchenort | Abschlußdatum der Recherche | Prüfer |
|---|---|---|
| Den Haag | 10. April 2013 | Bream, Philip |

EPO FORM 1503 03.82 (P04C03)

EP 2 735 892 A1

**ANHANG ZUM EUROPÄISCHEN RECHERCHENBERICHT**
**ÜBER DIE EUROPÄISCHE PATENTANMELDUNG NR.**

EP 12 19 3601

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-04-2013

| Im Recherchenbericht angeführtes Patentdokument | Datum der Veröffentlichung | Mitglied(er) der Patentfamilie | Datum der Veröffentlichung |
|---|---|---|---|
| US 5419396 A | 30-05-1995 | AU 2600395 A<br>CN 1129026 A<br>US 5419396 A<br>US 5494108 A<br>WO 9533122 A1 | 21-12-1995<br>14-08-1996<br>30-05-1995<br>27-02-1996<br>07-12-1995 |

Für nähere Einzelheiten zu diesem Anhang : siehe Amtsblatt des Europäischen Patentamts, Nr.12/82